(19) Europäisches Patentamt
European Patent Office
Office européen des brevets

(11) EP 2 896 487 A1

(12) **EUROPEAN PATENT APPLICATION**
published in accordance with Art. 153(4) EPC

(43) Date of publication:
**22.07.2015 Bulletin 2015/30**

(21) Application number: **12884342.2**

(22) Date of filing: **04.09.2012**

(51) Int Cl.:
***B25J 13/08*** ***(2006.01)*** ***B23P 19/02*** ***(2006.01)***

(86) International application number:
**PCT/JP2012/072486**

(87) International publication number:
**WO 2014/037999 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kabushiki Kaisha Yaskawa Denki**
**Kitakyushu-shi, Fukuoka 806-0004 (JP)**

(72) Inventors:
- **FUKUDA Takuya**
**Kitakyushu-shi**
**Fukuoka 806-0004 (JP)**
- **ANDO Shingo**
**Kitakyushu-shi**
**Fukuoka 806-0004 (JP)**

(74) Representative: **Viering, Jentschura & Partner**
**Patent- und Rechtsanwälte**
**Grillparzerstrasse 14**
**81675 München (DE)**

# (54) METHOD FOR ADJUSTING ROBOT CONTROL PARAMETERS, ROBOT SYSTEM, AND ROBOT CONTROL DEVICE

(57) A method for adjusting a control parameter of a robot (20) comprising, inserting step for inserting a part (P) into a hole (H) where a plurality of sections has been set in a depth direction by a robot (20), the robot having a force sensor (FS) that detects force applied from outside according to impedance control; and parameter updating step for lowering a viscosity parameter of one of the plurality of sections so as not to make the same section a target to be updated continuously, wherein the method adjusts the viscosity parameter of each section.

*Fig.7*

20
202
FS
P
W
H
Dz (1)
Dz (2)
Dz (3)
Dz (4)
Dz (5)
SECTION 1
SECTION 2
SECTION 3
SECTION 4
SECTION 5



Printed by Jouve, 75001 PARIS (FR)

## Description

### Technical Field

The present invention relates to a method for adjusting robot control parameters, a robot system, and a robot controller.

### Background Art

Patent Literature 1 discloses a force controller capable of switching force restricting values and compliance control parameters during operation to achieve high speed operation, while preventing excessive force from being applied at the time of occurrence of misalignment.

### Citation List

### Patent Literature

Patent Literature 1: JP 2011-104740 A

## Summary of Invention

### Technical Problem

During an inserting operation in which a robot inserts a part (insertion work) into a hole formed in a work to be inserted, the operation of the robot is controlled according to impedance control in which force generated as a result of contact between the part and the work to be inserted is made to match a target value, while force sensor signals output from a force sensor mounted on the tip end of an arm are observed.

Impedance parameters that determine characteristics of the impedance control are adjusted based on the following points:

1) To decrease reaction force generated when the part reaches the bottom of the hole, a viscosity parameter has to be set to a large value (or pushing force of the part is set to a small value).
2) To increase an inserting speed and reduce tact time, a viscosity parameter has to be set to a small value (or pushing force of the part is set to a large value).

Generally, the parameter is controlled according to the point 1) above to prevent breakage of the part and the work to be inserted, which leads to an extended tact time.

An object of the present invention is to provide a method for adjusting robot control parameters, a robot system, and a robot controller capable of reducing time necessary for inserting a part into a hole. Another object of the present invention is to provide a method for adjusting robot control parameters, a robot system, and a robot controller capable of decreasing reaction force more than a predetermined magnitude, when a part reaches the bottom of a hole.

### Solution to Problem

To solve the above problems, an aspect of the present invention provides a method for adjusting a control parameter of a robot, comprising:

inserting step for inserting a part into a hole where a plurality of sections has been set in a depth direction by a robot, the robot having a force sensor that detects force applied from outside according to impedance control; and
parameter updating step for lowering a viscosity parameter of one of the plurality of sections so as not to make the same section a target to be updated continuously,
wherein the method adjusts the viscosity parameter of each section.

Another aspect of the present invention provides a robot system, comprising:

a robot that performs an inserting operation of inserting a part into a hole where a plurality of sections has been set in a depth direction; and
a robot controller that controls an operation of the robot, wherein

the robot controller includes
a control module configured to perform impedance control of the inserting operation performed by the robot, and
a parameter adjusting module configured to adjust a viscosity parameter of the impedance control, the viscosity parameter being set stepwise according to an insertion length of the part.

Another aspect of the present invention provides a robot controller, comprising:

a control module configured to perform impedance control of the operation of a robot that performs an inserting operation of inserting a part into a hole where a plurality of sections has been set in a depth direction; and
a parameter adjusting module configured to adjust a viscosity parameter of the impedance control stepwise according to an insertion length of the part in the depth direction.

**Advantageous Effects of Invention**

According to the aspects of the present invention, it is possible to reduce time necessary for inserting the part into the hole. It is also possible to decrease the reaction force more than a predetermined magnitude, when the part inserted by the robot reaches the bottom of the hole.

**Brief Description of Drawings**

Fig. 1 is a structural diagram of a robot system according to an embodiment of the present invention.
Fig. 2 is a schematic diagram of an inserting operation of the robot system.
Fig. 3 is a block diagram of a control module included in a robot controller of the robot system.
Fig. 4 is an explanatory view briefly illustrating a method for adjusting a control parameter of the robot system.
Fig. 5A is an explanatory view illustrating an operation of preliminary adjustment of a robot included in the robot system.
Fig. 5B is an explanatory diagram illustrating a force command in the preliminary adjustment of the robot included in the robot system.
Fig. 6 is an explanatory view illustrating the inserting operation of the robot included in the robot system.
Fig. 7 is an explanatory view illustrating a hole into which the robot included in the robot system inserts a part.
Fig. 8 is a flowchart illustrating an adjusting algorithm of the robot controller included in the robot system.
Fig. 9 is an explanatory view illustrating an insertion starting posture in a first example of experiment.
Fig. 10 is a graph illustrating peak values of the reaction force Fpeak1, Fpeak 2 relative to a change of insertion time Tim in the first example of experiment.
Fig. 11 is a graph illustrating the reaction force and positions during the inserting operation.
Fig. 12 is a graph illustrating an adjustment result of the viscosity parameter in the first example of experiment.
Fig. 13 is an explanatory view illustrating an insertion starting posture in a second example of experiment.
Fig. 14 is a graph illustrating peak values of the reaction force Fpeak 1, Fpeak 2 relative to a change of insertion time Tim in the second example of experiment.
Fig. 15 is a graph illustrating an adjustment result of the viscosity parameter in the second example of experiment.

**Description of Embodiments**

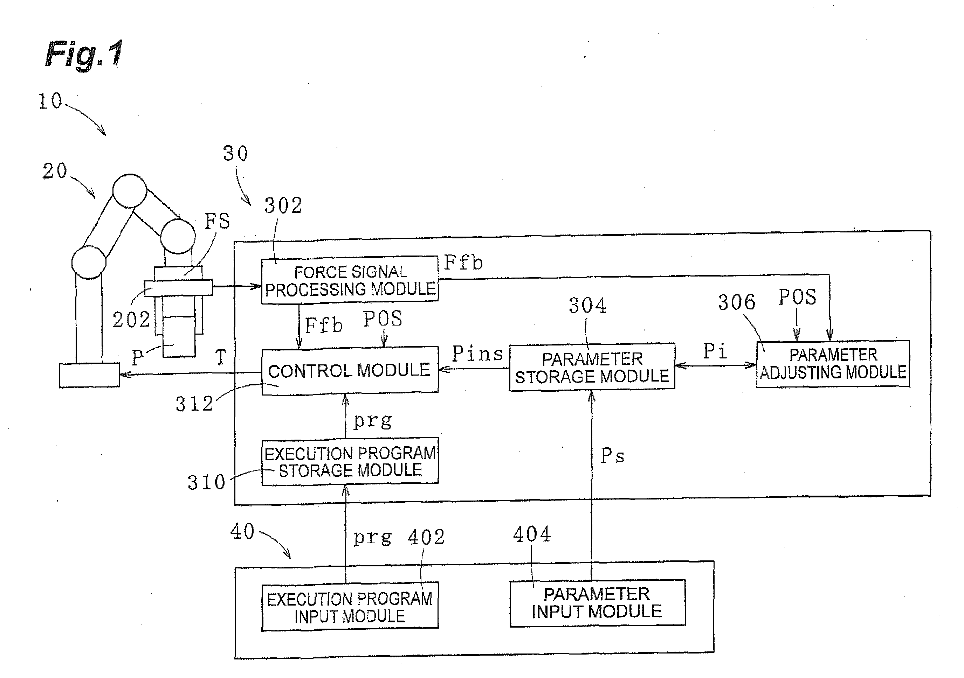

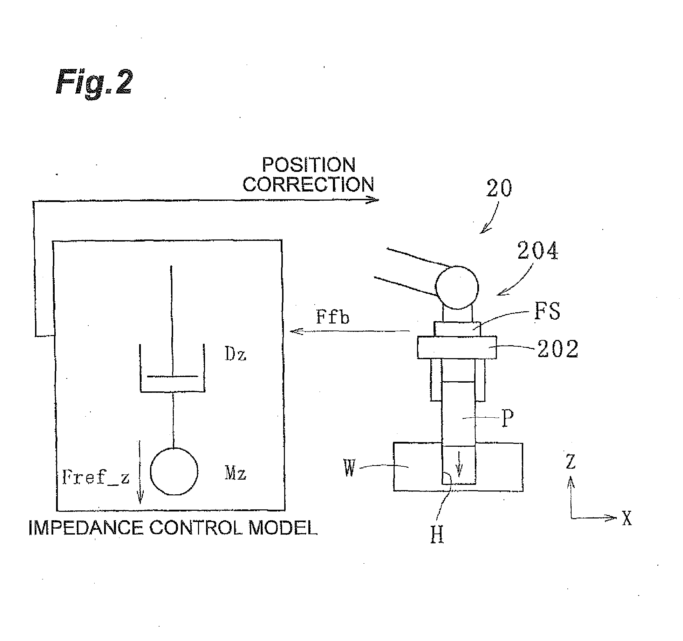

Next, embodiments of the present invention will be described by referring to the accompanying drawings in order to understand the present invention. In the drawings, parts unrelated to the description may not be illustrated.
A robot system 10 according to an embodiment of the present invention includes a robot 20 and a robot controller 30 that controls operations of the robot 20, as illustrated in Fig. 1.
A position of a hand 202 of the robot 20 is corrected according to impedance control based on an impedance control model, as illustrated in Fig. 2. Specifically, the robot 20 grasps a predetermined portion of, for example, a column-shaped part P to allow inserting operation of inserting the part P into a hole H formed in a work W to be inserted.
The robot 20 is, for example, a six-axis articulated robot. The robot 20 has a force sensor FS that detects force applied from the outside between a wrist 204 and the hand 202. The force sensor FS is, for example, a six-axis force sensor. The force sensor FS can measure forces in directions of X, Y, and Z-axes, respectively, of a tool coordinate system fixed to the hand 202. The force sensor FS can also measure moment around the X, Y, and Z-axes of the tool coordinate system. That is, the force sensor FS can detect an external force acting on the hand 202 of the robot 20.
The robot controller 30 (see Fig. 1) can switch a viscosity parameter of the impedance control stepwise according to the insertion quantity (insertion length) of the part P to control the operation of the robot 20 according to the impedance control. The viscosity parameter herein refers to a viscosity parameter related to the inserting direction of the part P, and may simply be referred to as viscosity parameter hereinafter.

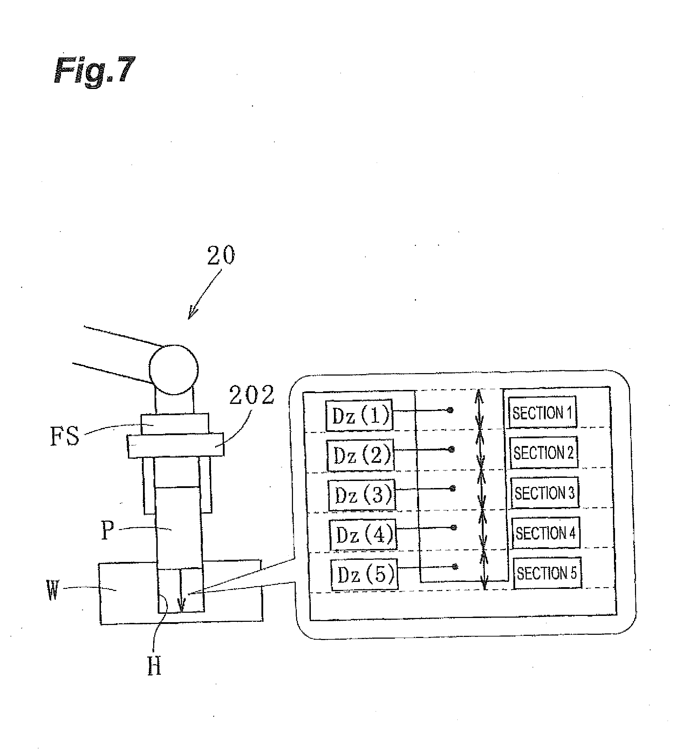

In addition, the robot controller 30 can adjust the viscosity parameter of sections (see Fig. 7) having been set in a depth direction of the hole H.

The robot controller 30 includes a force signal processing module 302, a parameter storage module 304, a parameter adjusting module 306, an execution program storage module 310, and a control module 312.

The force signal processing module 302 receives an electric signal representing the external force detected by the force sensor FS. The force signal processing module 302 processes the electric signal and outputs the processed signal as a force feedback value Ffb.

The parameter storage module 304 can store an impedance parameter Pins necessary for the impedance control of the robot 20, a setting parameter Ps set by an operator to adjust the viscosity parameter, and an internal parameter Pi used by the parameter adjusting module 306 to adjust the viscosity parameter.

The parameter adjusting module 306 can adjust the viscosity parameter of each section stored in the parameter storage module 304 based on the force feedback value Ffb input from the force signal processing module 302 and position information POS obtained by forwardly converting encoder values of servo motors that drive each axis of the robot 20. Specifically, the parameter adjusting module 306 can adjust the viscosity parameter of the impedance control set stepwise according to the insertion quantity of the part P.

The execution program storage module 310 can store an execution program prg that defines the operation of the robot 20. The execution program storage module 310 may be formed by, for example, a flash memory or a hard disk drive.

The control module 312 interprets the execution program prg stored in the execution program storage module 310, and performs the impedance control of the robot 20 according to the force feedback value Ffb and the impedance parameter Pins. The robot 20 executes the inserting operation according to the impedance control.

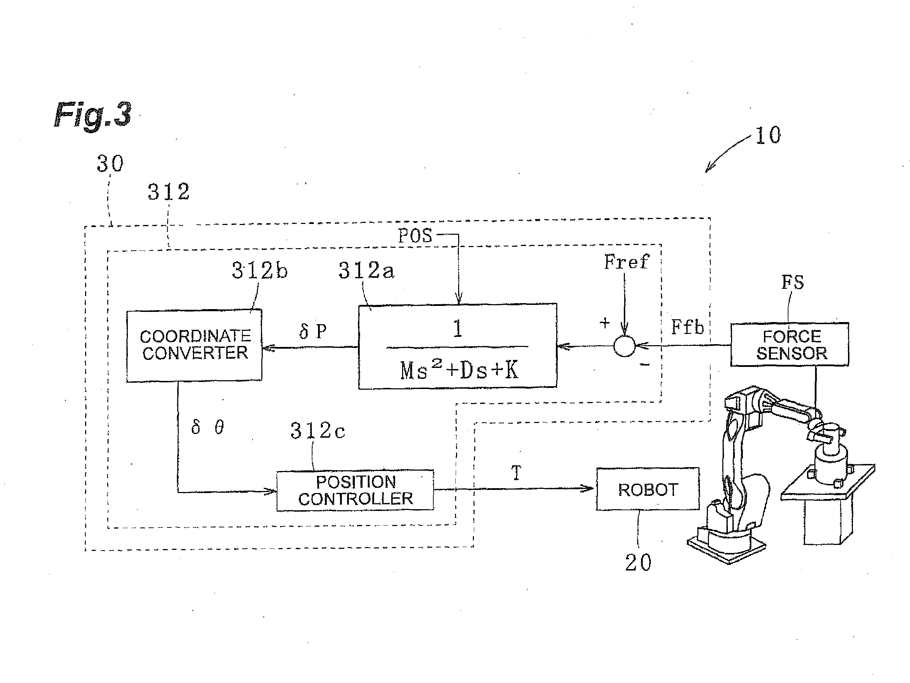

The control module 312 includes an impedance controller 312a, a coordinate converter 312b, and a position controller 312c, as illustrated in Fig. 3.

The impedance controller 312a outputs a position correction quantity $\delta P$ in a robot coordinate system (an orthogonal coordinate system fixed to the base of the robot 20) according to the impedance control, based on the force feedback value Ffb and a force direction value Fref.

A model of the impedance control is expressed using an inertia parameter M, a viscosity parameter D, a rigidity parameter K, and a Laplace operator s by the following equation (1):

$$[0022]\ (Ms^2 + Ds + K)\delta P = Fref - Ffb \qquad \text{(Equation 1)}$$

A value to be used as the viscosity parameter in the inserting direction corresponds to the section through which the tip end of the part P passes. The section is identified based on the position information POS.

The coordinate converter 312b converts the position correction quantity $\delta P$ in the robot coordinate system into a correction quantity $\delta\theta$ of each articulation axis.

The position controller 312c outputs torque T to the robot 20 based on the correction quantity $\delta\theta$ of each articulation axis.

An input device, such as a teach pendant 40, is connected to the robot controller 30 (see Fig. 1). The teach pendant 40 includes an execution program input module 402 and a parameter input module 404.

An operator can make the robot 20 perform desired motions from the execution program input module 402, while creating the execution program prg that describes such motions. The created execution program prg is stored in the execution program storage module 310.

In addition, the operator can select a desired execution program prg stored in the execution program storage module 310 from the execution program input module 402, to drive the robot 20 according to the selected execution program prg.

Further, the operator can set the setting parameter Ps stored in the parameter storage module 304 from the parameter input module 404.

Next, an operation of the robot system 10 is described.

The robot controller 30 of the robot system 10 adjusts a viscosity parameter Dz in the inserting direction of the part P for each section having been set in the depth direction of the hole H according to a control parameter adjusting method which will be described later.

The robot controller 30 then executes the impedance control of the robot 20 according to the viscosity parameter Dz that has been adjusted for each section. As a result, the robot 20 inserts the part P grasped by the robot 20 into the hole H. That is, the robot system 10 switches the viscosity parameter Dz according to the insertion quantity (insertion length) of the part P before inserting the part P into the hole H.

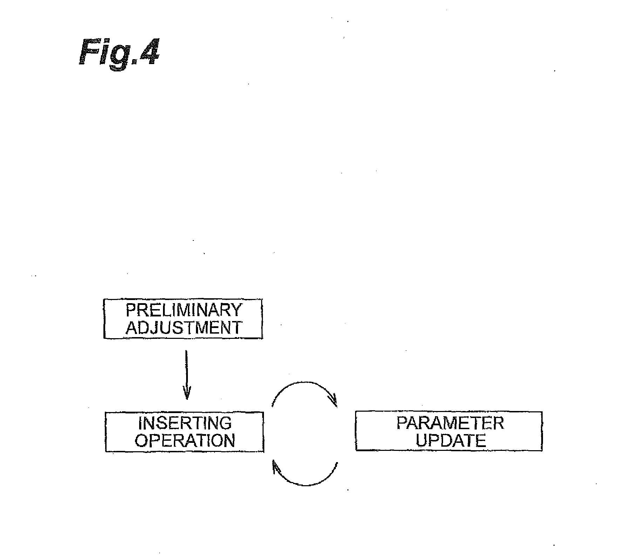

The control parameter adjusting method includes, as an adjusting operation of the viscosity parameter Dz, the step of executing a preliminary adjustment and the step of repeating an inserting operation of the part P and updating of the parameter after the preliminary adjustment has been executed, as illustrated in Fig. 4.

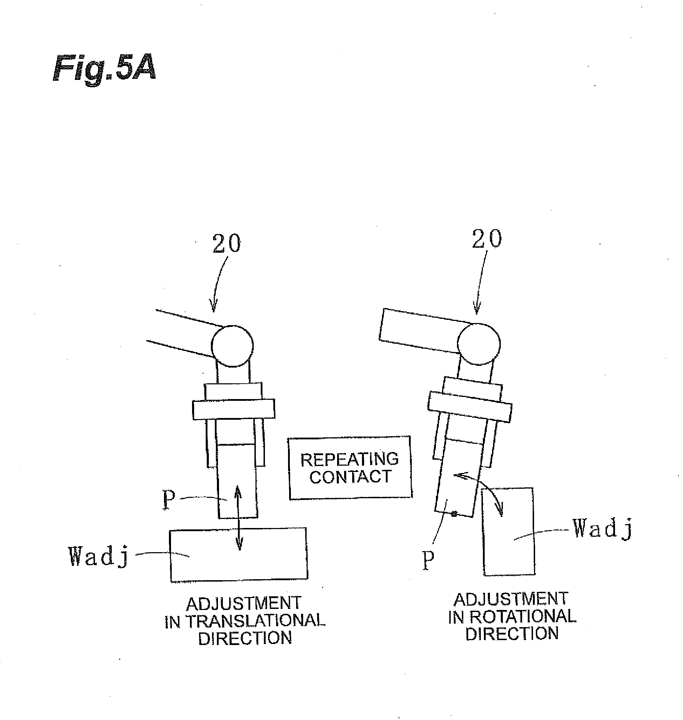

During the preliminary adjustment, the part P is repeatedly brought into contact with work Wadj to be adjusted by the robot 20, as illustrated in Fig. 5A, to adjust the viscosity parameter and provide an initial value Dini of the viscosity parameter. The inertia parameter M is fixed, and the rigidity parameter K is zero.

In adjusting the viscosity parameter D indicated in the equation (1) during the preliminary adjustment, response is faster as the viscosity parameter D is smaller, but fluctuation increases and stability decreases when the part P is in contact. In contrast, the fluctuation decreases and the stability increases when the viscosity parameter D is increased, but the response is delayed.

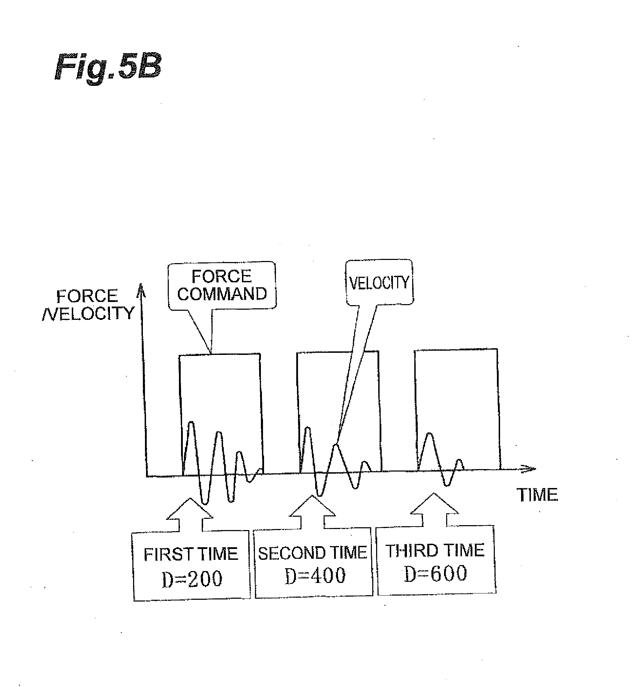

Therefore, as illustrated in Fig. 5B, when a step-like force command is supplied to bring the part P into contact with the work Wadj to be adjusted, the viscosity parameter (indicated by D in Fig. 5B) is adjusted in such a manner that the minimum settling time of the velocity response is attained. Such adjustment is performed in six translational and rotational directions. The adjustment of the viscosity parameter in the translational direction is performed by translating the part P in the axis direction to bring the part P into contact with the work Wadj to be adjusted. The adjustment of the viscosity parameter in the rotational direction is performed by rotating the part P about each axis to bring the part P into contact the work Wadj to be adjusted.

As a result of the preliminary adjustment, the initial value Dini of the viscosity parameter is determined such that the minimum settling time is attained during the contact.

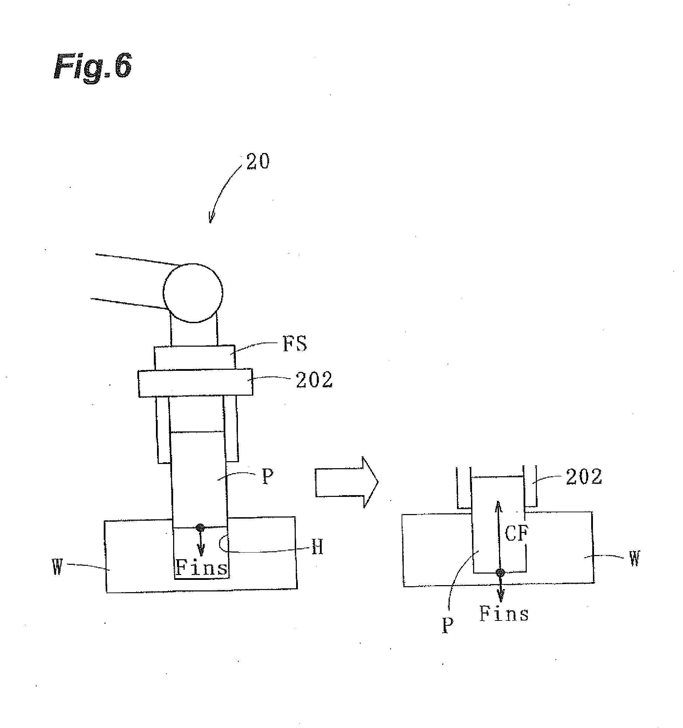

During the preliminary adjustment, the position and posture of the robot 20 are set in such a manner that the tip end of the part P is fitted in the hole H, as illustrated in Fig. 6.

Further, a force command value Fref_z in the inserting direction of the part P is also provided during the preliminary adjustment.

In the inserting operation illustrated in Fig. 4, the robot 20 inserts, as an inserting step, the part P grasped by the robot 20 into the hole H with a pressing force Fins based on the force command value Fref_z (see Fig. 6). When the part P reaches the bottom of the hole H, the part P receives reaction force CF.

In the parameter updating operation, the viscosity parameter Dz is updated (lowered), as an updating step, for each of the plurality of sections having been set in the depth direction of the hole H according to the reaction force applied to the robot 20 during the inserting operation, as illustrated in Fig. 7. Fig. 7 exemplary illustrates five sections. The viscosity parameter Dz is updated according to an adjustment algorithm, which will be described later, by the parameter adjusting module 306.

In principle, the viscosity parameter Dz decreases by a predetermined magnitude each time the parameter updating operation is executed unless the peak value Fpeak1 of the reaction force acting on the part P before it reaches the bottom of the hole H and the peak value Fpeak2 of the reaction force acting on the part P after it has reached the bottom of the hole H exceed a predetermined threshold value (first threshold value) Fthre1 and a predetermined threshold value (second threshold value) Fthre2, respectively, and the viscosity parameter reaches a predetermined lower limit value.

In the parameter updating operation, during the inserting operation, the force command value Fref_z is kept constant irrespective of the position of the part P. The force command value Fref_z is kept constant even when the viscosity parameter Dz has been updated.

Regarding the section including the bottom of the hole H, as indicated by a section 5 of Fig. 7, the viscosity parameter Dz is not updated and kept to a value that has been adjusted in the preliminary adjustment. The viscosity parameter Dz is not updated for the section including the bottom of the hole H because the viscosity parameter has already been adjusted in the preliminary adjustment to decrease the settling time when the part P is in contact with the work W to be inserted.

Until the tip end of the part P is completely fitted in the hole H, the robot 20 is controlled by the impedance control using the viscosity parameter set in the preliminary adjustment.

According to the adjustment algorithm, the reaction force acting on the robot 20 is monitored to prevent the robot from being subjected to an excessively increased reaction force, and the viscosity parameter Dz is decreased for each section. As a result, the response of the inserting operation of the robot 20 is improved and the time necessary for inserting the part P is decreased.

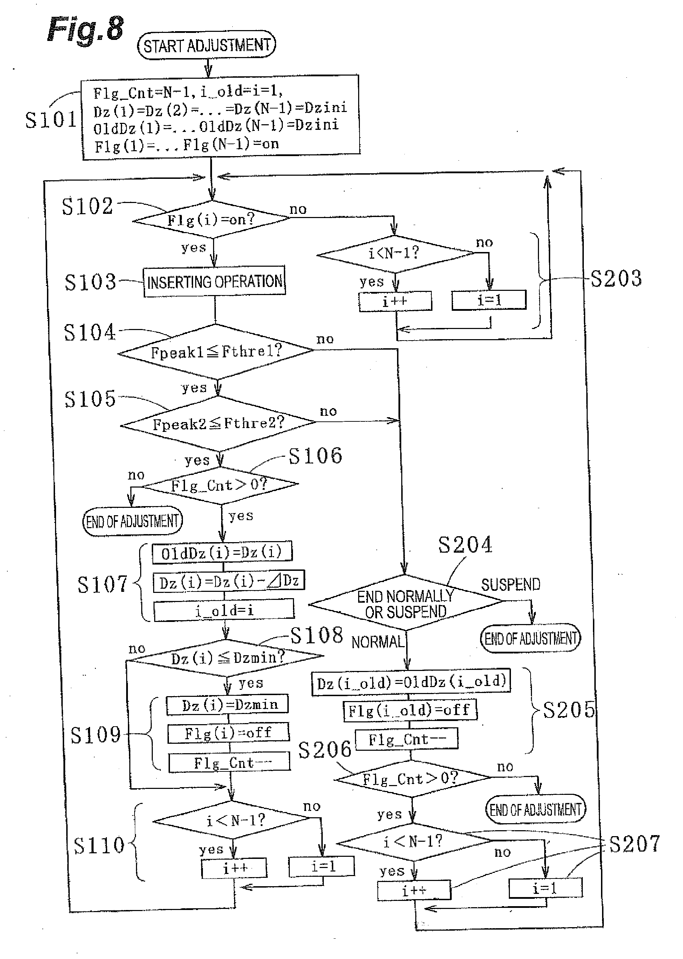

Next, the adjustment algorithm executed by the parameter adjusting module 306 is described in detail by referring to Fig. 8.

The impedance parameter Pins stored in the parameter storage module 304, the setting parameter Ps set by the operator to adjust the viscosity parameter D, and the internal parameter Pi used by the parameter adjusting module 306 to adjust the viscosity parameter D have been mentioned above and are specifically listed as follows:

A. Impedance Parameter Pins:

(1) Viscosity parameter D
(2) Inertia parameter M
(3) Rigidity parameter K

B. Setting Parameter Ps:

(1) Initial value Dzini of the viscosity parameter in the inserting direction.

(2) Lower limit value Dzmin of the viscosity parameter in the inserting direction.

(3) Decreased quantity (update quantity) $\Delta$Dz of the viscosity parameter in the inserting direction.

(4) Threshold value Fthre1 of the reaction force acting on the part P before it reaches the bottom of the hole H.

(5) Threshold value Fthre2 of the reaction force acting on the part P after it has reached the bottom of the hole H.

(6) Number of divisions N (natural number) of the sections.

(7) Force command value Fref_z for moving the hand 202 in the inserting direction of the part P.

C. Internal Parameter Pi:

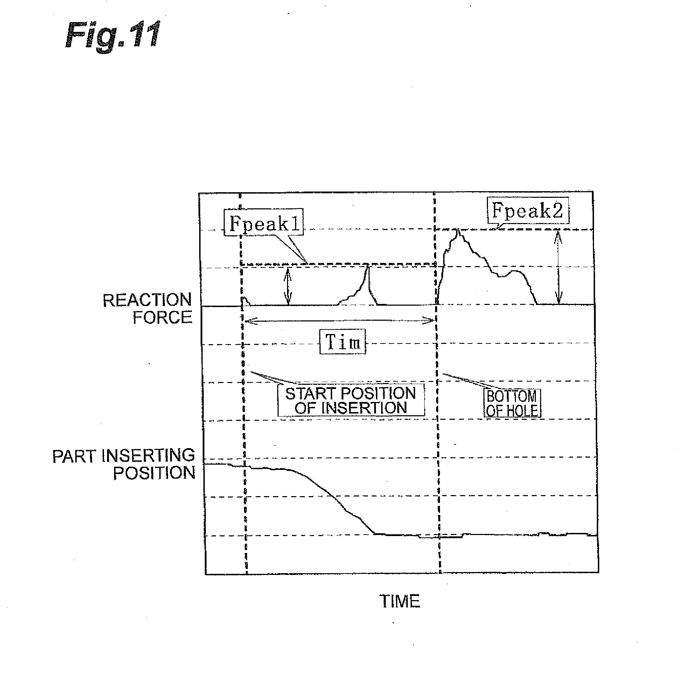

(1) Variable i (where $1 \leq i \leq N-1$) representing a target section to be updated for updating the viscosity parameter.
(2) Variable i_old (where $1 \leq i_old \leq N-1$) representing the preceding target section to be updated.
(3) Viscosity parameter Dz (i) in the inserting direction in the target section i to be updated.
(4) Viscosity parameter OldDz (i) in the preceding inserting direction.
(5) Flag Flg (i) indicating propriety of updating of the viscosity parameter Dz (i).
(6) Variable Flg_Cnt (where $0 \leq Flg_Cnt \leq N-1$) indicating the number of Dz (i) capable of being updated.
(7) Peak value Fpeak1 of the reaction force acting on the part P before it reaches the bottom of the hole H (see Fig. 11).
(8) Peak value Fpeak2 of the reaction force acting on the part P after it has reached the bottom of the hole H (see Fig. 11).

(Step S101)

In this step, parameter settings are initialized. Specifically, a variable Flg_Cnt indicating the number of Dz (i) capable of being updated is set to N-1.
A variable i_old indicating the preceding target section is set to 1.
A variable i indicating the current target section is set to 1.
The current viscosity parameter Dz (1) to Dz (N-1) is set to the initial value of the viscosity parameter Dzini obtained in the preliminary adjustment mentioned above.
The preceding viscosity parameter OldDz (1) to OldDz (N-1) is set to the initial value of the viscosity parameter Dzini obtained in the preliminary adjustment mentioned above.
Flags Flg (1) to Flg (N-1) indicating propriety of updating of the viscosity parameters Dz (1) to Dz (N-1) are set to "on" to indicate that these flags can be updated.

(Step S102)

It is determined whether the Flag (i) is "on". If it is "on", the process proceeds to step S103. If it is "off" indicating that the update is impossible, the process proceeds to step S203.

(Step S103)

The inserting operation is executed to allow the robot 20 to insert the part P into the hole H (see Fig. 7).

(Step S104)

As a first determination step, if the peak value Fpeak1 of the reaction force acting on the part P before it reaches the bottom of the hole H is equal to or smaller than the threshold value Fthre1, the process proceeds to step S105. Otherwise, the process proceeds to step S204.

The peak value Fpeak1 of the reaction force is determined from the force feedback value Ffb output from the force signal processing module 302.

(Step S105)

As a second determination step, if the peak value Fpeak2 of the reaction force acting on the part P after it has reached the bottom of the hole H is equal to or smaller than the threshold value Fthre2, the process proceeds to step S106. Otherwise, the process proceeds to step S204.

The peak value Fpeak2 of the reaction force is determined from the force feedback value Ffb output from the force signal processing module 302.

(Step S106)

If the variable Flg_Cnt is larger than 0, the process proceeds to step S107. If the variable Flg_Cnt is 0, the adjustment is ended.

(Step S107)

The viscosity parameter Dz (i) is stored in the viscosity parameter OldDz (i). The decreased quantity (update quantity) $\Delta$Dz of the viscosity parameter is subtracted from the viscosity parameter Dz (i), and an obtained value is regarded as a new viscosity parameter Dz (i). The variable i_old is set to i.

(Step S108)

As a third determination step, if the new viscosity parameter Dz (i) is equal to or smaller than the lower limit value Dzmin of the viscosity parameter, the process proceeds to step S109. Otherwise, the process proceeds to step S110.

(Step S109)

The viscosity parameter Dz (i) is set to the lower limit value Dzmin of the viscosity parameter.

The flag Flg (i) is set to "off" indicating that the update is impossible. The variable Flg_Cnt indicating the number of Dz (i) capable of being updated is decreased by 1.

(Step S110)

If the variable i is smaller than N-1, the variable i is increased by 1. Otherwise, the variable i is set to 1. That is, the section N is excluded from updating of the viscosity parameter, as the variable i is not going to be N in the subsequent steps.

After that, the process returns to the step S102.

(Step S203)

If the variable i is smaller than N-1, the variable i is increased by 1. Otherwise, the variable i is set to 1. That is, the sections having the flag Flg (i) set to "off" in the flow from the step S102 to the present step S203 are excluded from updating of the viscosity parameter Dz (i). In addition, the section N is excluded from updating of the viscosity parameter, as the variable i is not going to be N in the subsequent steps.

After that, the process returns to the step S102.

(Step S204)

The end state of the inserting operation executed in the step S103 is determined. If the inserting operation has been ended normally, the process proceeds to step S205. If the process has been suspended, the adjustment is ended. That is, if the part P is stuck in the hole H and stopped, and the peak value Fpeak1 of the reaction force exceeds the threshold value Fthre1 in the flow from the steps S103, S 104 to step S204, it is determined that abnormality has occurred and the adjustment is ended. Meanwhile, if the vibration is not settled after the part P has reached the bottom of the hole H and the peak value Fpeak2 of the reaction force exceeds the threshold value Fthre2 in the flow from the step S103, S104, S105 to the step S204, it is determined that the abnormality has occurred and the adjustment is ended.

(Step S205)

The current viscosity parameter Dz (i_old) of the preceding target section to be updated is returned to the previous viscosity parameter OldDz (i_old) of the preceding target section to be updated. That is, the viscosity parameter Dz (i_old) is returned to the previous value before updating for the target section updated immediately before the current section.

The flag Flg (i_old) is set to "off" indicating that updating is impossible. The variable Flg_Cnt indicating the number of Dz (i) capable of being updated is decreased by 1.

(Step S206)

If the variable Flg_Cnt is larger than 0, the process proceeds to step S207. If the variable Flg_Cnt is 0, the adjustment is ended.

(Step S207)

If the variable i is smaller than N-1, i is increased by 1. Otherwise, the variable i is set to 1. That is, the section N is excluded from the updating of the viscosity parameter, as the variable i is not going to be N in the succeeding steps.

After that, the process returns to the step S102.

By repeating the above steps, the viscosity parameter Dz (i) for each section is determined.

In this case, if the updating of a specific section alone is repeatedly performed, it may cause sudden acceleration or deceleration during the execution of the inserting operation, cause the part P to be stuck in the hole H, or otherwise excessively increase the reaction force. In contrast, according to the present adjustment algorithm, the target section i to be updated changes in turn like 1, 2 ... N-1, 1, 2, such that a smooth inserting operation can be realized. That is, the viscosity parameter of the section located next to the preceding target section is updated according to the present adjustment algorithm. The target section i to be updated is not necessarily changed one section at a time. That is, it is sufficient that the same section does not continue to be the target section to be updated.

Next, examples of experiment of inserting the part P grasped by the robot 20 will be illustrated to further describe the robot system 10.

(First Example of Experiment)

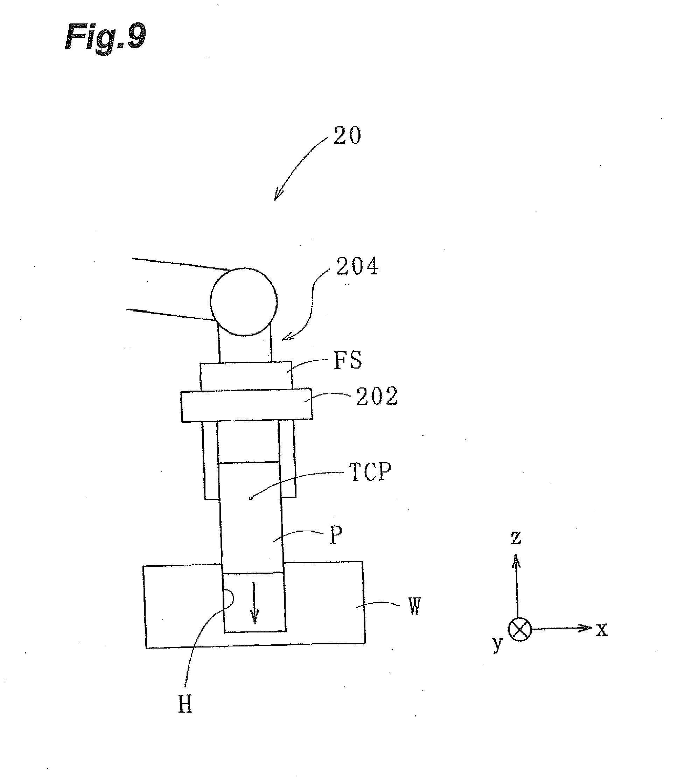

After the preliminary adjustment mentioned above, the inserting operation and the parameter updating were performed in a state where the tip end of the part P was fitted about 1 mm into the work W to be inserted, as illustrated in Fig. 9.

Specifications and adjustment parameters of the part P and the work W to be inserted are illustrated in Tables 1 and 2 below.

[Table 1]

TABLE 1 SPECIFICATIONS OF PART AND WORK TO BE INSERTED

| | |
|---|---|
| MATERIAL OF PART | STEEL |
| SHAPE | COLUMN |
| SIZE | Φ 30 mm |
| GAP BETWEEN PART AND HOLE | 30 μm |
| DEATH OF HOLE | 20 mm |
| CHAMFERED QUANTITY OF END SURFACE OF PART AND OPENING OF HOLE | CO. 5 |

[Table 2]

TABLE 2 PARAMETER

| | |
|---|---|
| Dini | 50 Ns / cm |
| ΔD | 9 Ns / cm |
| Dmin | 5 Ns / cm |
| Fref_z | 20 N |
| Fthre1 | 40 N |
| Fthre2 | 50 N |
| NUMBER OF SECTIONS | 5 |

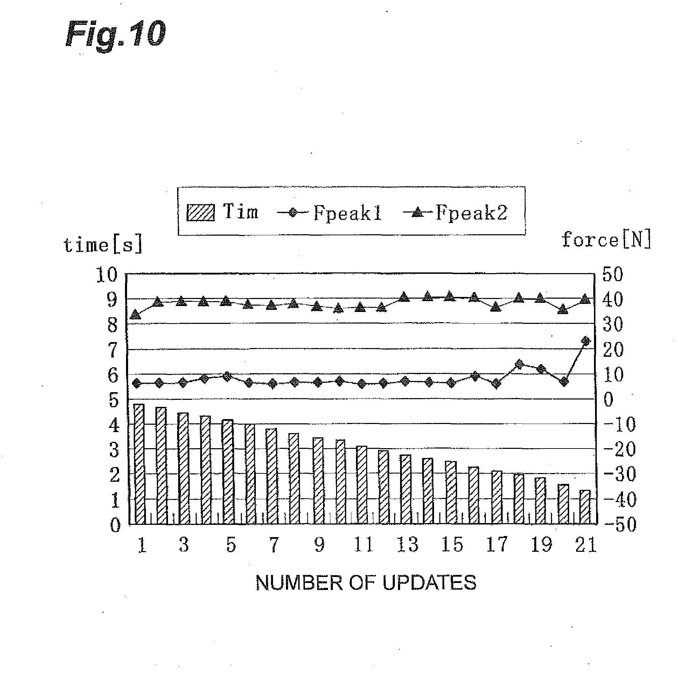

As a result of the experiment, the inserting operation was repeated 21 times, and time (insertion time) Tim taken to reach the bottom of the hole from the start position of insertion, and the peak values Fpeak1, Fpeak2 of the reaction force were changed as illustrated in Fig. 10. In Fig. 10, the horizontal axis represents the number of updating of the viscosity parameter Dz. The left vertical axis represents the insertion time. The right vertical axis represents the magnitude of the reaction force.

Meanwhile, Fig. 11 is a graph illustrating a relationship between the reaction force and the inserting position of the part P. The upper line of the graph illustrates the reaction force, and the lower line of the graph illustrates the inserting position of the part P. The inserting position of the part P is indicated such that its value becomes smaller as the part P is further inserted into the hole H. The horizontal axis represents time. The insertion time Tim and the peak values Fpeak1, Fpeak2 of the reaction force are as illustrated in Fig. 11.

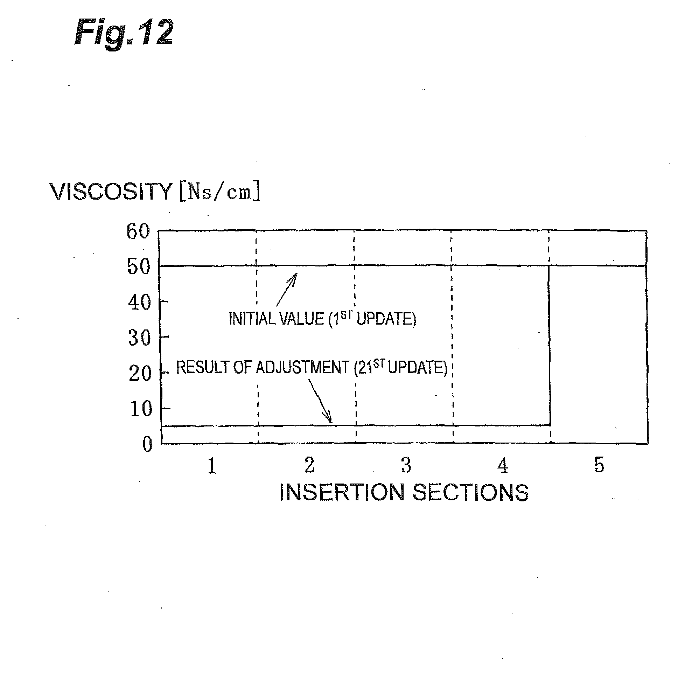

As illustrated in Fig. 10, during a total of 21 times of insertion, the peak values Fpeak1, Fpeak2 of the reaction force were lower than the threshold values Fthre1, Fthre2, respectively, as illustrated in Table 2. As a result, according to the adjustment algorithm mentioned above (see Fig. 8), all the viscosity parameters Dz (1) to Dz (4) of each section reached the lower limit value Dmin of the viscosity parameter, and the adjustment was ended (see Fig. 12).

As a result, the insertion time Tim was decreased from 4.8 seconds (1st updating) to 1.3 seconds (21 st updating).

(Second Example of Experiment)

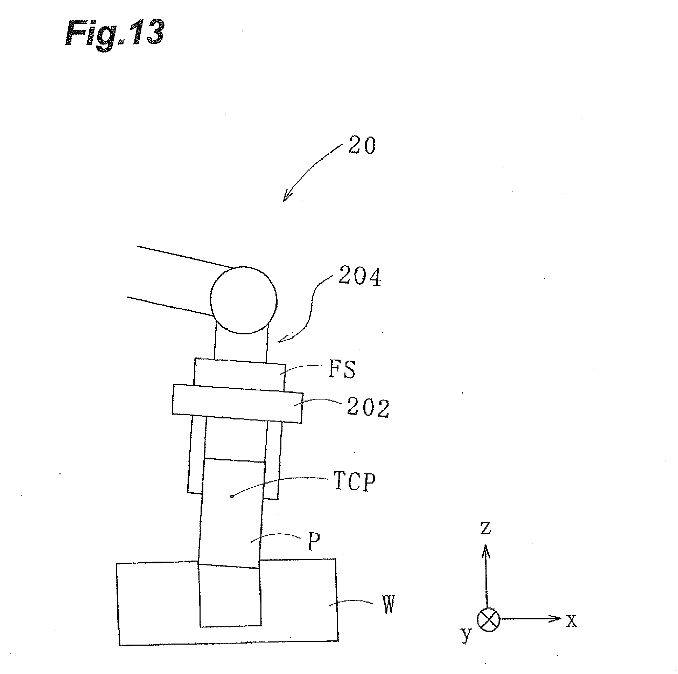

After the preliminary adjustment mentioned above, the inserting operation and the parameter updating were performed in a state where the part P grasped by the robot 20 is tilted by + 0.5 degree around the y-axis running through the tool center point (TCP) and the part P is fitted into the hole H in a tilted manner, as illustrated in Fig. 13.

Specifications and adjustment parameters of the part P were the same as those of the first example of experiment (see Tables 1 and 2).

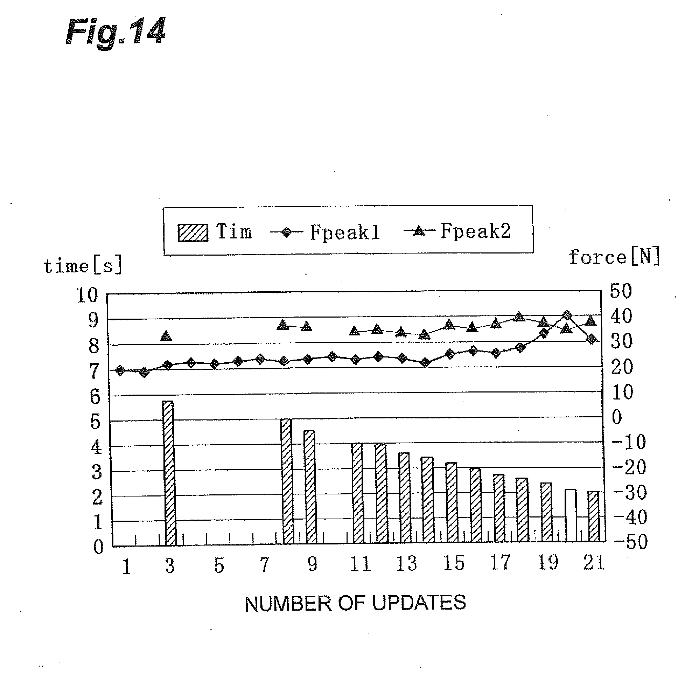

As a result of the experiment, the inserting operation was repeated 21 times, and the insertion time Tim and the peak values Fpeak1, Fpeak2 of the reaction force were changed as illustrated in Fig. 14. In Fig. 14, the horizontal axis represents the number of updating of the viscosity parameter Dz. The left vertical axis represents the insertion time. The right vertical axis represents the magnitude of the reaction force.

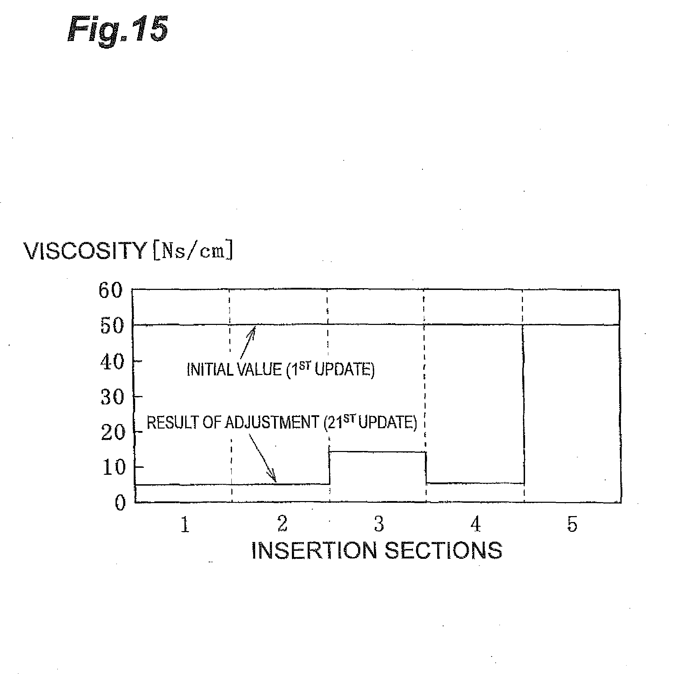

As illustrated in Fig. 14, in the first, second, fourth, fifth, sixth, seventh, and tenth inserting operations, the part P was stuck in the middle of insertion and the inserting operation was ended without reaching the bottom of the hole. At that time, the reaction force Fpeak1 became lower than the threshold value, such that the parameter was updated to continue adjustment. In the twentieth operation, Fpeak1 was larger than the threshold value Fthre2, and the adjustment result was rejected to terminate the update of Dz (3). In the final adjustment result adopted, Dz (3) did not reach the lower limit value Dmin of the viscosity (see Fig. 15).

As a result, the insertion time Tim was decreased from 5.8 seconds (third update) to 2.1 seconds (twenty-first update).

As described above, the robot system 10 decreases the insertion time of inserting the part P into the hole. The robot system 10 suppresses the reaction force to be equal to or smaller than the determined threshold value when the part P inserted by the robot 20 has reached the bottom of the hole H.

The present invention is not limited to the embodiments described above, and various changes can be conceived so long as the scope of the present invention is maintained. For example, it may be possible to constitute the present invention by combining a portion or all embodiments of modifications above to fall within the technical scope of the present invention.

For example, the peaks of the reaction force being internal parameter or the lower limit values of the viscosity parameter in the inserting direction being the setting parameter may vary depending on the sections.

Reference Signs List

| | |
|---|---|
| 10: | Robot system |
| 20: | Robot |
| 30: | robot controller |
| 40: | Teach pendant |
| 202: | Hand |
| 204: | Wrist |
| 302: | Force signal processing module |
| 304: | Parameter storage module |
| 306: | Parameter adjusting module |
| 310: | Execution program storage module |
| 312: | Control module |
| 312a: | Impedance controller |
| 312b: | Coordinate converter |
| 312c: | Position Controller |
| 402: | Execution program input module |
| 404: | Parameter input module |
| FS: | Force sensor |
| H: | Hole |
| P: | part |
| W: | Work to be inserted |
| Wadj: | Work for adjustment |

## Claims

**1.** A method for adjusting a control parameter of a robot, comprising:

inserting step for inserting a part into a hole where a plurality of sections has been set in a depth direction by a robot, the robot having a force sensor that detects force applied from outside according to impedance control; and
parameter updating step for lowering a viscosity parameter of one of the plurality of sections so as not to make the same section a target to be updated continuously,
wherein the method adjusts the viscosity parameter of each section.

**2.** The method for adjusting the control parameter of the robot according to claim 1, wherein during the parameter updating step, the viscosity parameter of a section including a bottom of the hole is not made a target of adjustment.

**3.** The method for adjusting the control parameter of the robot according to claim 2, wherein during the parameter updating step, the viscosity parameter of a section located next to a section that has been a target of preceding adjustment is made the target of adjustment.

**4.** The method for adjusting the control parameter of the robot according to claim 2 or 3, further comprising:

first determining step for determining that a reaction force acting on the robot exceeds a predetermined first threshold value before the part reaches the bottom of the hole;
second determining step for determining that a reaction force acting on the robot exceeds a predetermined second threshold value when the part has reached the bottom of the hole; and
third determining step for determining that the viscosity parameter reaches a predetermined lower limit value.

**5.** A robot system, comprising:

a robot that performs an inserting operation of inserting a part into a hole where a plurality of sections has been set in a depth direction; and

a robot controller that controls an operation of the robot, wherein
the robot controller includes
a control module configured to perform impedance control of the inserting operation performed by the robot, and
a parameter adjusting module configured to adjust a viscosity parameter of the impedance control, the viscosity parameter being set stepwise according to an insertion length of the part.

**6.** The robot system according to claim 5, wherein
when a reaction force of the robot does not exceed a predetermined magnitude while the robot performs the inserting operation, the parameter adjusting module lowers the viscosity parameter by a predetermined magnitude in one section of the plurality of sections except the section including the bottom of the hole.

**7.** A robot controller, comprising:

a control module configured to perform impedance control of the operation of a robot that performs an inserting operation of inserting a part into a hole where a plurality of sections has been set in a depth direction; and
a parameter adjusting module configured to adjust a viscosity parameter of the impedance control stepwise according to an insertion length of the part in the depth direction.

Fig.1
10
20
30
302
FS
FORCE SIGNAL PROCESSING MODULE
Ffb
202
Ffb
POS
304
306
POS
P
T
Pins
PARAMETER STORAGE MODULE
Pi
PARAMETER ADJUSTING MODULE
CONTROL MODULE
312
prg
EXECUTION PROGRAM STORAGE MODULE
310
Ps
40
prg
402
404
EXECUTION PROGRAM INPUT MODULE
PARAMETER INPUT MODULE

*Fig.2*

POSITION
CORRECTION
20
204
FS
Ffb
202
Dz
P
Z
W
Fref_z
Mz
X
H
IMPEDANCE CONTROL MODEL

10
FS
FORCE SENSOR
Ffb
Fref
+
−
1
Ms²+Ds+K
POS
312a
δP
312b
COORDINATE CONVERTER
δθ
312c
POSITION CONTROLLER
T
ROBOT
20
312
30

*Fig.3*

*Fig.4*

PRELIMINARY ADJUSTMENT
INSERTING OPERATION
PARAMETER UPDATE

# Fig.5A

20
20
REPEATING CONTACT
P
Wadj
P
Wadj
ADJUSTMENT IN TRANSLATIONAL DIRECTION
ADJUSTMENT IN ROTATIONAL DIRECTION

*Fig.5B*

FORCE
/VELOCITY
FORCE
COMMAND
VELOCITY
TIME
FIRST TIME
D=200
SECOND TIME
D=400
THIRD TIME
D=600

# Fig.6

20
FS
202
P
H
W
Fins
202
CF
W
P
Fins

*Fig.7*

20
202
FS
P
W
H
Dz(1)
Dz(2)
Dz(3)
Dz(4)
Dz(5)
SECTION 1
SECTION 2
SECTION 3
SECTION 4
SECTION 5

Fig.8
START ADJUSTMENT
S101
Flg_Cnt=N-1, i_old=i=1,
Dz(1)=Dz(2)=...=Dz(N-1)=Dzini
OldDz(1)=...OldDz(N-1)=Dzini
Flg(1)=...Flg(N-1)=on
S102
Flg(i)=on?
no
yes
i<N-1?
no
yes
i++
i=1
S203
S103
INSERTING OPERATION
S104
Fpeak1≦Fthre1?
no
yes
S105
Fpeak2≦Fthre2?
no
yes
S106
no
Flg_Cnt>0?
END OF ADJUSTMENT
yes
S204
S107
OldDz(i)=Dz(i)
Dz(i)=Dz(i)-⊿Dz
i_old=i
END NORMALLY OR SUSPEND
SUSPEND
END OF ADJUSTMENT
S108
NORMAL
no
Dz(i)≦Dzmin?
yes
Dz(i_old)=OldDz(i_old)
Flg(i_old)=off
Flg_Cnt--
S205
S109
Dz(i)=Dzmin
Flg(i)=off
Flg_Cnt--
S206
Flg_Cnt>0?
no
END OF ADJUSTMENT
yes
S110
i<N-1?
no
yes
i++
i=1
i<N-1?
no
S207
yes
i++
i=1

*Fig.9*

20
204
FS
202
TCP
P
z
W
y
x
H

# Fig.10

Tim
Fpeak1
Fpeak2
time[s]
force[N]
10
9
8
7
6
5
4
3
2
1
0
50
40
30
20
10
0
-10
-20
-30
-40
-50
1
3
5
7
9
11
13
15
17
19
21
NUMBER OF UPDATES

# Fig.11

Fpeak1
Fpeak2
REACTION FORCE
Tim
START POSITION OF INSERTION
BOTTOM OF HOLE
PART INSERTING POSITION
TIME

# Fig.12

VISCOSITY [Ns/cm]
60
50
40
30
20
10
0
INITIAL VALUE (1ST UPDATE)
RESULT OF ADJUSTMENT (21ST UPDATE)
1
2
3
4
5
INSERTION SECTIONS

*Fig.13*

20
204
FS
202
TCP
P
W
z
y
x

# Fig.14

Tim
Fpeak1
Fpeak2
time[s]
force[N]
10
9
8
7
6
5
4
3
2
1
0
50
40
30
20
10
0
-10
-20
-30
-40
-50
1
3
5
7
9
11
13
15
17
19
21
NUMBER OF UPDATES

# Fig.15

VISCOSITY [Ns/cm]
60
50
40
30
20
10
0
INITIAL VALUE (1ST UPDATE)
RESULT OF ADJUSTMENT (21ST UPDATE)
1
2
3
4
5
INSERTION SECTIONS

## INTERNATIONAL SEARCH REPORT

International application No. PCT/JP2012/072486

A. CLASSIFICATION OF SUBJECT MATTER
*B25J13/08*(2006.01)i, *B23P19/02*(2006.01)i

According to International Patent Classification (IPC) or to both national classification and IPC

B. FIELDS SEARCHED

Minimum documentation searched (classification system followed by classification symbols)
B25J13/08, B23P19/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-88225 A (Yaskawa Electric Corp.), 06 May 2011 (06.05.2011), & US 2011/0093120 A1 & EP 2314426 A2 & CN 102039594 A | 1-7 |
| A | JP 2005-028532 A (Fanuc Ltd.), 03 February 2005 (03.02.2005), (Family: none) | 1-7 |
| A | JP 2001-277162 A (Omron Corp.), 09 October 2001 (09.10.2001), (Family: none) | 1-7 |
| A | JP 2011-104740 A (Mitsubishi Electric Corp.), 02 June 2011 (02.06.2011), (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 November, 2012 (26.11.12) | 11 December, 2012 (11.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/072486

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-136588 A (Yaskawa Electric Corp.), 07 June 2007 (07.06.2007), (Family: none) | 1-7 |
| A | JP 5-150836 A (Kawasaki Heavy Industries, Ltd.), 18 June 1993 (18.06.1993), (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011104740 A